(19) Europäisches Patentamt
European Patent Office
Office européen des brevets

(11) **EP 4 254 227 B1**

(12) **EUROPEAN PATENT SPECIFICATION**

(45) Date of publication and mention
of the grant of the patent:
**27.05.2026   Bulletin 2026/22**

(51) International Patent Classification (IPC):
*G06F 17/18* (2006.01)     *G06N 20/00* (2019.01)
*H04L 9/08* (2006.01)

(21) Application number: **23166033.3**

(22) Date of filing: **31.03.2023**

(52) Cooperative Patent Classification (CPC):
**G06N 20/00; G06F 17/18; H04L 9/085;**
H04L 2209/46

(54) **METHOD AND APPARATUS FOR JOINT TRAINING LOGISTIC REGRESSION MODEL**

VERFAHREN UND VORRICHTUNG ZUM GEMEINSAMEN TRAINIEREN EINES LOGISTISCHEN
REGRESSIONSMODELLS

PROCÉDÉ ET APPAREIL POUR UN MODÈLE DE RÉGRESSION LOGISTIQUE
D'APPRENTISSAGE CONJOINT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **02.04.2022   CN 202210346184**

(43) Date of publication of application:
**04.10.2023   Bulletin 2023/40**

(73) Proprietor: **Alipay (Hangzhou) Information
Technology Co., Ltd.
Hangzhou, Zhejiang 310000 (CN)**

(72) Inventors:
• **CUI, Jinming
  Hangzhou, Zhejiang, 310000 (CN)**
• **WANG, Li
  Hangzhou, Zhejiang, 310000 (CN)**

(74) Representative: **Fish & Richardson P.C.
Highlight Business Towers
Mies-van-der-Rohe-Straße 8
80807 München (DE)**

(56) References cited:
**WO-A1-2018/174873     US-A1- 2022 083 690
US-A1- 2022 092 216**

• **PAYMAN MOHASSEL ET AL: "SecureML: A
System for Scalable Privacy-Preserving Machine
Learning", 2017 IEEE SYMPOSIUM ON
SECURITY AND PRIVACY (SP), 1 May 2017
(2017-05-01), pages 19 - 38, XP055554322, ISBN:
978-1-5090-5533-3, DOI: 10.1109/SP.2017.12**

## Description

### TECHNICAL FIELD

One or more embodiments of this specification relate to the field of data processing technologies, and in particular, to methods and apparatuses for jointly training a logistic regression model.

### BACKGROUND

Data are the basis of machine learning, but in most industries, data often exist in the form of silos in consideration of issues such as privacy security of the data, and there are many obstacles to achieving centralized integration of data even between different departments of the same company. In view of the dilemma between data silos and data privacy, the industry proposed federated learning (FL), also known as federated machine learning, joint learning, or consortium learning. FL is a machine learning framework designed to help multiple data parties to use data and model machine learning while satisfying privacy security of the data.

A logistic regression (LR) model is a widely used machine learning model, and training the LR model under the FL framework is a hot research topic. However, an existing method for jointly training the LR model is too complex to satisfy practical application needs.

Therefore, a solution for jointly training the LR model is needed to better satisfy the practical application needs, for example, reducing communication traffic and calculation amounts among multiple participants.

WO 2018/174873 describes privacy-preserving machine learning. Private data from multiple sources is secret shared among two or more training computers.

P. Mohassel et al, SecureML: A system for scalable privacy-preserving machine learning, IEEE Symposium on Security and Privacy (2017) describes protocols for privacy preserving machine learning for linear regression, logistic regression and neural network training using the stochastic gradient descent method.

US 2022/0083690 describes methods and systems for obtaining a jointly trained model based on privacy protection.

US 2022/0092216 describes a framework for privacy-preserving machine learning based on a three-server model. Data owners secret-share their data among three servers who train and evaluate models on the joint data using three-party computation.

### SUMMARY

The invention is defined in the claims. One or more embodiments of this specification describe methods and apparatuses for jointly training a logistic regression model. A secret sharing technology is described and a random number fragment is sent by a third party so as to construct mask data corresponding to a sample characteristic, a model parameter, and a sample label, thereby implementing secure calculation of a gradient fragment and effectively reducing communication traffic and calculation amounts among participants.

According to a first aspect, a method for jointly training a logistic regression model is provided. The training includes three types of training data: a sample characteristic, a sample label, and a model parameter, and each of the three types of training data is split into fragments that are distributed between two parties. The method is performed by either first party of the two parties, and includes: performing masking on three first-party fragments corresponding to the three types of training data by respectively using first fragments of three random numbers in a first fragment of a random array to obtain three first mask fragments, and sending the three first mask fragments to a second party, where the first fragment of the random array is a fragment, sent by a third party to the first party, of two-party fragments that are obtained by splitting values in the random array generated by the third party; constructing three pieces of mask data corresponding to the three types of training data by using the three first mask fragments and three second mask fragments received from the second party; and performing a first calculation based on the three pieces of mask data and the first fragment of the random array to obtain a first gradient fragment for updating the first-party fragment of the model parameter, where the first calculation is determined based on a Taylor expansion of a gradient calculation of the logistic regression model.

In some embodiments, the first party holds the sample characteristic and the second party holds the sample label; and before obtaining the three first mask fragments, the method further includes: splitting the sample characteristic into a corresponding first-party fragment and a corresponding second-party fragment by using a secret sharing technology, and sending the second-party fragment to the second party; and receiving, from the second party, a first-party fragment obtained by splitting the sample label by using the secret sharing technology.

In some embodiments, before obtaining the three first mask fragments, the method further includes: after initializing the model parameter, splitting the model parameter into a corresponding first-party fragment and a corresponding second-party fragment, and sending the second-party fragment to the second party; or receiving, from the second party, a first-party fragment obtained by splitting the initialized model parameter by using the secret sharing technology.

In some embodiments, the performing masking on three first-party fragments corresponding to the three types of training data by respectively using first fragments of three random numbers to obtain three first mask fragments includes: for any type of training data, performing masking on a first-party fragment of the type of training data by using a first fragment of a random number having the same dimension as the type of training data to obtain a corresponding first mask fragment.

In some embodiments, the constructing three pieces of mask data corresponding to the three types of training data by using the three first mask fragments and three second mask fragments received from the second party includes: for any type of training data, constructing corresponding mask data by using a first mask fragment and a second mask fragment of the type of training data.

In some embodiments, the random array further includes a fourth random number; the three random numbers include a second random number corresponding to the model parameter; the three pieces of mask data include characteristic mask data corresponding to the sample characteristic; after constructing the three pieces of mask data corresponding to the three types of training data and before obtaining the first gradient fragment, the method further includes: determining a first product mask fragment corresponding to a product result of the second random number and the characteristic mask data based on a first fragment of the second random number, the characteristic mask data, and a first fragment of the fourth random number, and sending the first product mask fragment to the second party; constructing product mask data corresponding to the product result by using the first product mask fragment and a second product mask fragment corresponding to the product result received from the second party; and the performing a first calculation based on the three pieces of mask data and the first fragment of the random array includes: further performing the first calculation based on the product mask data.

In some embodiments, the random array further includes a plurality of additional values, and the plurality of additional values are values obtained by the third party by performing an operation based on the three random numbers; the performing a first calculation based on the three pieces of mask data and the first fragment of the random array to obtain a first gradient fragment includes: calculating gradient mask data corresponding to a training gradient based on the three pieces of mask data; calculating a first removal fragment for a mask in the gradient mask data based on the three pieces of mask data, the first fragments of the three random numbers, and a first fragment of the plurality of additional values; and performing de-masking on the gradient mask data by using the first removal fragment to obtain the first gradient fragment, or determining the first removal fragment as the first gradient fragment.

In some embodiments, after obtaining the first gradient fragment, the method further includes: subtracting a product of a predetermined learning rate and the first gradient fragment from the first-party fragment of the model parameter as an updated first-party fragment of the model parameter.

According to a second aspect, an apparatus for jointly training a logistic regression model is provided. The training includes three types of training data: a sample characteristic, a sample label, and a model parameter, and each of the three types of training data is split into fragments that are distributed between two parties. The apparatus is integrated into either first party of the two parties, and includes: a masking unit, configured to perform masking on three first-party fragments corresponding to the three types of training data by respectively using first fragments of three random numbers in a first fragment of a random array to obtain three first mask fragments, and send the three first mask fragments to a second party, where the first fragment of the random array is a fragment, sent by a third party to the first party, of two-party fragments that are obtained by splitting values in the random array generated by the third party; a data reconstruction unit, configured to construct three pieces of mask data corresponding to the three types of training data by using the three first mask fragments and three second mask fragments received from the second party; and a gradient fragment calculation unit, configured to perform a first calculation based on the three pieces of mask data and the first fragment of the random array to obtain a first gradient fragment for updating the first-party fragment of the model parameter, where the first calculation is determined based on a Taylor expansion of a gradient calculation of the logistic regression model.

According to a third aspect, a computer-readable storage medium is provided. The computer-readable storage medium stores a computer program, and when the computer program is executed on a computer, the computer is enabled to perform the method according to the first aspect.

According to a fourth aspect, a computing device is provided, including a memory and a processor. The memory stores executable code, and the processor executes the executable code to implement the method according to the first aspect.

According to the methods and the apparatuses provided in some embodiments of this specification, a secret sharing technology is described and a random number fragment is sent by a third party so as to construct mask data corresponding to a sample characteristic, a model parameter, and a sample label, thereby implementing secure calculation of a gradient fragment and effectively reducing communication traffic and calculation amounts among participants.

**BRIEF DESCRIPTION OF DRAWINGS**

To describe the technical solutions in some embodiments of this application more clearly, the following briefly describes the accompanying drawings needed for describing some embodiments. Clearly, the accompanying drawings in the following description are merely some embodiments of this application, and a person of ordinary skill in the art can still derive other drawings from these accompanying drawings without creative efforts.

FIG. 1 is a diagram illustrating a communication architecture for jointly training a logistic regression model, according to some embodiments;
FIG. 2 is a schematic diagram illustrating multi-party interaction for jointly training a logistic regression model, according to some embodiments; and
FIG. 3 is a schematic structural diagram illustrating an apparatus for jointly training a logistic regression model, according to some embodiments.

**DESCRIPTION OF EMBODIMENTS**

The solutions provided in this specification are described below with reference to the accompanying drawings.
As described previously, logistic regression (LR) is a machine learning algorithm with a wide range of application scenarios, such as user classification or product recommendation, etc. Typically, a gradient calculation formula for the LR model is as follows:

$$\nabla \mathbf{w} = \frac{1}{m}(\sigma(\mathbf{w}\mathbf{x}^{\mathrm{T}}) - \mathbf{y}^{\mathrm{T}})\mathbf{x} \qquad (1)$$

In the above formula, $\mathbf{x}$ represents a sample characteristic, $\mathbf{x} \in \mathbb{R}^{m \times n}$, where m represents a quantity of samples in a batch of training samples, and n represents a quantity of characteristics in a single training sample; $\mathbf{w}$ represents a model parameter, $\mathbf{w} \in \mathbb{R}^{n}$; $\mathbf{y}$ represents a sample label, $\mathbf{y} \in \mathbb{R}^{m \times 1}$; T represents a transpose operator; $\nabla \mathbf{w}$ represents a gradient of the model parameter; $\sigma(t) = \frac{1}{1+e^{-t}}$ represents a logistic function or sigmoid function.

During joint training of the LR model, calculating a gradient by directly using the above formula (1) is very complex. Therefore, it is proposed to simplify the calculation of the gradient through linear approximation of the logistic function, usually a Taylor expansion of the logistic function, for example, by using the first-order Taylor expansion of the logistic function, as shown in the following formula (2), to simplify the formula (1) into the form of formula (3).

$$\sigma(t) = \frac{1}{2} + \frac{1}{4}t \qquad (2)$$

$$\nabla w = \frac{1}{m}\left(\frac{1}{2} + \frac{1}{4}wx^{\mathrm{T}} - y^{\mathrm{T}}\right)x \qquad (3)$$

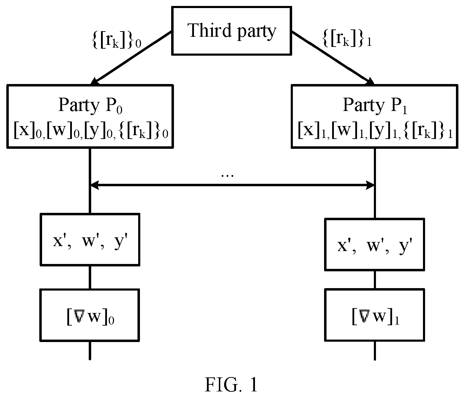

Based on the formula (3), only two operations of addition and multiplication are needed to complete a secure logistic regression operation.
Further, some embodiments of this specification disclose a solution for training the LR model by jointly calculating an approximation of the gradient of the LR model, for example, by using the joint calculation formula (3). As shown in FIG. 1, in this solution, the three types of training data, namely, the model parameter $\mathbf{w}$, the sample characteristic $\mathbf{x}$, and the sample label $\mathbf{y}$, are split into fragments that are distributed between two parties. Either party $P_i$ (or referred to as the party i, i = 0 or 1) of the two parties holds training data fragments $[\mathbf{w}]_i$, $[\mathbf{x}]_i$, and $[\mathbf{y}]_i$. In any round of iterative training, the party $P_i$ interacts with the other parties (or referred to as party $P_{\bar{i}}$ or party $\bar{i}$ below, $\bar{i} \neq i$) of the two parties (the interaction process is schematically indicated by a double-headed arrow and an ellipsis in FIG. 1) based on a party i fragment $\{[\mathbf{r}_k]_i\}_{k \in [1,N]}$ of a random array $\{[\mathbf{r}_k]\}_{k \in [1,N]}$ received from a third party other than the two parties, and a party i fragment of the training data held by the party $P_i$, to reconstruct mask data $\mathbf{w}'$, $\mathbf{x}'$, and $\mathbf{y}'$. Then, the party $P_i$ calculates a party i gradient $[\nabla \mathbf{w}]_i$ of the gradient based on the mask data and the party i fragment $\{[\mathbf{r}_k]_i\}_{k \in [1,N]}$ of the random array so as to update a party i fragment $[\mathbf{w}]_i$ of the model parameter. It is worthwhile to note that, for brevity of description, the subscripts $k \in [1, N]$ outside the set sign {} are omitted below.
As such, secure update of the gradient fragment is implemented by constructing the mask data.

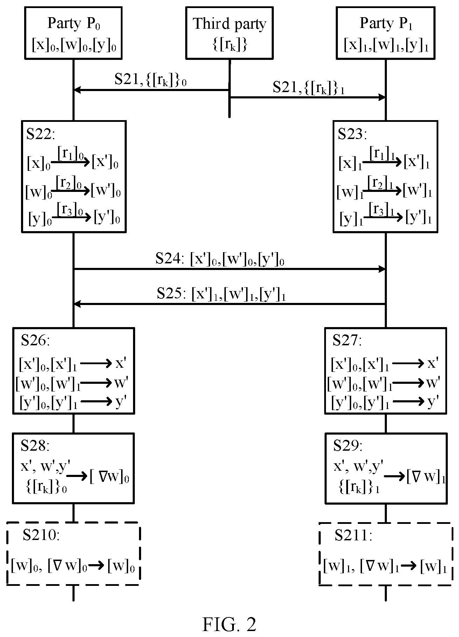

The implementation steps of the above solution are described below with reference to some specific embodiments. FIG. 2 is a schematic diagram illustrating multi-party interaction for jointly training a logistic regression model, according to some embodiments. As shown in FIG. 2, multiple parties include a party $P_0$, a party $P_1$, and a third party, and each party can be implemented as any apparatus, server, platform, device cluster, or the like having computing and processing capabilities.

For ease of understanding, sources of training data fragments in the party $P_0$ and the party $P_1$ are described first. The party $P_0$ and the party $P_1$ jointly maintain raw sample data. In some possible scenarios, the party $P_0$ holds sample characteristics **x** of a plurality of training samples, and the party $P_1$ holds sample labels **y** of the plurality of training samples. For example, the party $P_0$ holds user characteristics of a plurality of users, and the party $P_1$ holds classification labels of the plurality of users. In some other possible scenarios, the party $P_0$ holds a part of sample characteristics of a plurality of training samples, and the party $P_1$ holds sample labels of the plurality of training samples and another part of the sample characteristics. For example, the bank holds bank transaction data of a plurality of users, and the credit reference agency holds loan data and credit ratings of the plurality of users. In still some other possible scenarios, the party $P_0$ and the party $P_1$ hold different training samples, for example, hold payment samples collected based on different payment platforms.

Further, the two parties each split the sample data into two fragments based on the held sample data and by using a secret sharing (SS) technology, retain one of the fragments, and send the other fragment to the other parties. It should be understood that the SS technology is a basic technology for secure calculation. Raw data are split at random and then distributed. Each piece of distributed data is held by a different manager, and a single (or a protocol-specified quantity or less) data holder cannot perform secret restoration. For example, a process of performing secret sharing on the raw data can include the following: first selecting a security level parameter (system default or manual selection) and generating a corresponding finite field (e.g., $2^{256}$); and then uniformly selecting a random number $s_1 \in \mathbb{Z}_{2^{256}}$ within the finite field and calculating $s_2 = s - s_1$ so that $s_1$ and $s_2$ are used as two fragments of the raw data s and are distributed to two different managers.

Based on the above description, in some embodiments, the party $P_0$ splits the sample characteristic **x** it holds into two characteristic fragments and sends one of the two characteristic fragments to the party $P_1$. Correspondingly, the characteristic fragment sent to the party $P_1$ is denoted as $[\mathbf{x}]_1$, and the other characteristic fragment remaining in the party $P_0$ is denoted as $[\mathbf{x}]_0$. Similarly, the party $P_1$ splits the sample label **y** it holds into label fragments $[\mathbf{y}]_0$ and $[\mathbf{y}]_1$, and sends the fragment $[\mathbf{y}]_0$ to the party $P_0$ and retains the fragment $[\mathbf{y}]_1$.

As such, the party $P_0$ and the party $P_1$ each hold a characteristic fragment and a label fragment. In addition, the training of the LR model includes a plurality of rounds of iterations. To select sample data fragments to be used for different rounds, for example, the party $P_0$ performs a plurality of rounds of sampling based on identifiers (e.g., sample numbers) of all samples, and sends sampling results to the party $P_1$. As such, in each round of iterative training, each party determines a currently used characteristic fragment and label fragment based on identifiers of samples corresponding to the current round of iteration. For brevity of description, the characteristic fragment and the label fragment that the party $P_i$ uses in any round of iteration are still denoted as $[\mathbf{x}]_i$ and $[\mathbf{y}]_i$ below.

In addition, for the parameter fragments held by the party $P_0$ and the party $P_1$, before the first round of iterative training is performed on the LR model, either party $P_i$ can initialize the model parameter **w,** and split the model parameter into two fragments by using the SS technology, and then send one of the two fragments to the other parties. As such, the party $P_i$ can perform the first round of iterative training based on the fragment of the initialized model parameter. Further, in each subsequent round of iteration, the party $P_i$ takes part in the current round of iteration by using the parameter fragment obtained after the update in the previous round of iteration. For brevity of description, the parameter fragment that the party $P_i$ uses in any round of iteration is still denoted as $[\mathbf{w}]_i$ below.

The sources of training data fragments that the party $P_0$ and the party $P_1$ hold have been described above.

Any round of iterative training during joint training is described below. As shown in FIG. 2, the multi-party interaction process in any round includes the following:

In step S21, a third party sends a party i fragment of the random array $\{\mathbf{r}_k\}$ generated by the third party to the party $P_i$, including sending a party 0 fragment $\{[\mathbf{r}_k]_0\}$ of the random array to the party $P_0$, and sending a party 1 fragment $\{[\mathbf{r}_k]_1\}$ of the random array to the party $P_1$.

Specifically, the third party generates a plurality of random numbers to form the random array $\{\mathbf{r}_k\}$, splits each random number $\mathbf{r}_k$ into two fragments $[\mathbf{r}_k]_0$ and $[\mathbf{r}_k]_1$ by using the secret sharing technology so as to form the party 0 fragment $\{[\mathbf{r}_k]_0\}$ of the random array and the party 1 fragment $\{[\mathbf{r}_k]_1\}$ of the random array, and then sends the two fragments to the party $P_0$ and the party $P_1$, respectively. It is worthwhile to note that there are actually many methods for splitting the random number $\mathbf{r}_k$, for example, by using the following formula (4) or (5).

$$\mathbf{r}_k = [\mathbf{r}_k]_0 + [\mathbf{r}_k]_1 \qquad\qquad (4)$$

$$\mathbf{r}_k = [\mathbf{r}_k]_0 - [\mathbf{r}_k]_1 \qquad\qquad (5)$$

Further, the random array $\{\mathbf{r}_k\}$ includes at least random numbers $\mathbf{r}_1$, $\mathbf{r}_2$, and $\mathbf{r}_3$ having the same dimensions as the model parameter $\mathbf{w}$, the sample characteristic $\mathbf{x}$, and the sample label $\mathbf{y}$, respectively. Correspondingly, the party i fragment $\{[\mathbf{r}_k)_i\}$ of the random array includes at least party i fragments of three random numbers: $[\mathbf{r}_1]_i$, $[\mathbf{r}_2]_i$, and $[\mathbf{r}_3]_i$.

It should be understood that for different rounds of iterative training, the third party usually needs to regenerate a random array $\{\mathbf{r}_k\}$, thereby ensuring privacy security of the data during the interaction.

It can be determined from the above description that, the party $P_i$ can obtain the party i fragment $\{[\mathbf{r}_k)_i\}$ of the random array for the current round of iterative training. It is worthwhile to note that, for clarity and brevity of the following description, two steps with similar processes respectively performed by the party $P_0$ and the party $P_1$ during the interaction are collectively denoted as being performed by the party $P_i$ for centralized description.

Next, in steps S22 (i = 0) and S23 (i = 1), the party $P_i$ performs masking on party i fragments $[\mathbf{x}]_i$, $[\mathbf{w}]_i$, and $[\mathbf{y}]_i$ of three pieces of training data that the party $P_i$ holds by using party i fragments $[\mathbf{r}_1]_i$, $[\mathbf{r}_2]_i$, and $[\mathbf{r}_3]_i$ of three random numbers in a party i fragment $\{[\mathbf{r}_k)_i\}$ of the random array, to obtain party i fragments $[\mathbf{x}']_i$, $[\mathbf{w}']_i$, and $[\mathbf{y}']_i$ of three masks.

Specifically, for any type of training data, the party $P_i$ performs masking on a party i fragment of the training data by using a party i fragment of a random number having the same dimension as the type of training data to obtain a party i fragment of a corresponding mask. It is worthwhile to note that the masking can be implemented based on addition or subtraction operations, and masking methods used for different types of training data can be the same or different.

In some embodiments, the party $P_i$ performs masking on party i fragments of different training data by using the same method, for example, by using the following formula (6):

$$[\mathbf{x}']_i = [\mathbf{x}]_i - [\mathbf{r}_1]_i$$
$$[\mathbf{w}']_i = [\mathbf{w}]_i - [\mathbf{r}_2]_i$$
$$[\mathbf{y}']_i = [\mathbf{y}]_i - [\mathbf{r}_3]_i \qquad\qquad (6)$$

In some other embodiments, the party $P_i$ performs masking on party i fragments of different training data by using different methods, for example, by using the following formula (7):

$$[\mathbf{x}']_i = -[\mathbf{x}]_i - [\mathbf{r}_1]_i$$
$$[\mathbf{w}']_i = [\mathbf{w}]_i + [\mathbf{r}_2]_i$$
$$[\mathbf{y}']_i = -[\mathbf{y}]_i + [\mathbf{r}_3]_i \qquad\qquad (7)$$

As such, the party $P_i$ can obtain party i fragments $[\mathbf{x}']_i$, $[\mathbf{w}']_i$, and $[\mathbf{y}']_i$ of three masks. It is worthwhile to further note that, for the same type of training data, the methods in which two parties perform masking on their fragments are usually designed to be the same, but can be different. For example, the party $P_0$ calculates $[\mathbf{x}']_0 = [\mathbf{x}]_0 - [\mathbf{r}_1]_0$ and the party $P_1$ calculates $[\mathbf{x}']_1 = [\mathbf{x}]_1 + [\mathbf{r}_1]_1$.

It can be determined from the above description that, the party $P_i$ can obtain party i fragments of three masks so that the party $P_i$ sends the party i fragments of the three masks to the other parties in step S24 (i = 0) and step S25 (i = 1).

Next, in step S26 (i = 0) and step S27 (i = 1), the party $P_i$ constructs three pieces of mask data $\mathbf{x}'$, $\mathbf{w}'$, and $\mathbf{y}'$ corresponding to three types of training data by using the party i fragments $[\mathbf{x}']_i$, $[\mathbf{w}']_i$, and $[\mathbf{y}']_i$ of three masks and party ī fragments $[\mathbf{x}']_{\bar{i}}$, $[\mathbf{w}']_{\bar{i}}$, and $[\mathbf{y}']_{\bar{i}}$ of three masks received from the other parties. It should be understood that mask data of any type of training data are equivalent to data obtained by directly performing masking on the type of training data by using a corresponding random number. In addition, the mask data construction method adapts to the following: the method in which the third party splits the random number into fragments and the methods in which two parties respectively perform masking on the training data fragments by using the random number fragments.

According to some typical embodiments, the third party splits the random number $\mathbf{r}_k$ into fragments by using formula (4), the party $P_i$ determines the party i fragment of the mask by using formula (6), and the other parties determine the party ī fragment of the mask by using the same method as the party $P_i$. As such, in this step, the party $P_i$ can reconstruct the mask data by using the following formula (8).

$$\mathbf{x}' = [\mathbf{x}']_i + [\mathbf{x}']_{\bar{i}}$$

$$\mathbf{w}' = [\mathbf{w}']_i + [\mathbf{w}']_{\bar{i}}$$

$$\mathbf{y}' = [\mathbf{y}']_i + [\mathbf{y}']_{\bar{i}} \tag{8}$$

It can be determined from the above description that, the party $P_i$ can reconstruct three pieces of mask data: **x'**, **w'**, and **y'**. Then, in step S28 (i = 0) and step S29 (i = 1), the party $P_i$ performs a calculation based on the three pieces of reconstructed mask data **x'**, **w'**, and **y'**, and the party i fragment $\{[\mathbf{r}_k]_i\}$ of the random array held by the party $P_i$, to obtain the party i fragment $[\nabla\mathbf{w}]_i$ of the gradient.

It is worthwhile to note that the calculation formula for the party i fragment $[\nabla\mathbf{w}]_i$ of the gradient is designed based on the Taylor expansion of the gradient calculation of the LR model, or referred to as a gradient calculation formula below, for example, the above formula (3). Specifically, the gradient calculation formula relates to the three types of training data. Correspondingly, an expression, formed based on the three types of mask data and three random numbers, corresponding to the three types of training data is substituted into the gradient calculation formula so as to obtain an expression between a gradient truth value $\nabla\mathbf{w}$ and both of a gradient mask value $\nabla\mathbf{w}'$ and mask removal data **M.**

$$\nabla\mathbf{w} = \nabla\mathbf{w}' + \mathbf{M} \tag{9}$$

For example, an expression corresponding to three types of training data shown in formula (10) is substituted into the above formula (3) so as to obtain formula (11).

$$\mathbf{x} = \mathbf{x}' + \mathbf{r}_1$$

$$\mathbf{w} = \mathbf{w}' + \mathbf{r}_2$$

$$\mathbf{y} = \mathbf{y}' + \mathbf{r}_3 \tag{10}$$

$$\nabla\mathbf{w} = \frac{1}{m}\left(\frac{1}{2} + \frac{1}{4}\mathbf{w}\mathbf{x}^T - \mathbf{y}^T\right)\mathbf{x} = \frac{1}{4m}\left(2\mathbf{x} + \mathbf{w}\mathbf{x}^T\mathbf{x} - \mathbf{y}^T\mathbf{x}\right)$$

$$= \frac{1}{4m}\Big[2(\mathbf{x}' + \mathbf{r}_1) + (\mathbf{w}' + \mathbf{r}_2)(\mathbf{x}' + \mathbf{r}_1)^T(\mathbf{x}' + \mathbf{r}_1)$$

$$- (\mathbf{y}' + \mathbf{r}_3)^T(\mathbf{x}' + \mathbf{r}_1)\Big] = \frac{1}{4m}\Big[\left(2\mathbf{x}' + \mathbf{w}'\mathbf{x}'^T\mathbf{x}' - \mathbf{y}'^T\mathbf{x}'\right)\Big] + \mathbf{M}$$

$$\tag{11}$$

It should be understood that m in the above formula is a quantity of characteristics in a sample, is not related to privacy, and can be held by both parties. For the calculation of the party i fragment $[\nabla\mathbf{w}]_i$ of the gradient, it can be designed based on formula (9) that, $\nabla\mathbf{w}'$ is calculated based on three types of mask data, and a party i fragment $[\mathbf{M}]_i$ of mask removal data **M** (or briefly referred to as removal data) is calculated based on the party i fragment $\{[\mathbf{r}_k]_i\}$ of the random array.

Specifically, in this step, the party $P_i$ at least needs to calculate the party i fragment $[\mathbf{M}]_i$ of the removal data. Further, in some embodiments, it can be inferred by observing formula (11) that, the expression of the removal data **M** includes a plurality of calculation items related to random numbers $\mathbf{r}_1$, $\mathbf{r}_2$, and $\mathbf{r}_3$. Therefore, it can be designed that the random array $\{\mathbf{r}_k\}$ further includes a plurality of additional values obtained by performing an operation based on the random numbers $\mathbf{r}_1$, $\mathbf{r}_2$, and $\mathbf{r}_3$. Correspondingly, the party $P_i$ can determine the party i fragment $[\mathbf{M}]_i$ of the removal data based on party i fragments of the plurality of additional values, party i fragments of the random numbers $\mathbf{r}_1$, $\mathbf{r}_2$, and $\mathbf{r}_3$, and the three pieces of reconstructed mask data.

In addition, in some embodiments, the expression of the removal data **M** in formula (11) includes a calculation item $\mathbf{r}_2\mathbf{x}'^T\mathbf{r}_1$. Therefore, it can be designed that the party $P_i$ reconstructs product mask data e' corresponding to $\mathbf{r}_2\mathbf{x}'^T$, thereby implementing secure calculation for the $\mathbf{r}_2\mathbf{x}'^T\mathbf{r}_1$ and further implementing secure calculation for the removal data **M.**

According to some specific embodiments, the random array $\{\mathbf{r}_k\}$ further includes the random number $\mathbf{r}_4$. Therefore, before this step is performed, the method further includes the following: the party $P_i$ determines a party i fragment $[\mathbf{e}']_i$ of a product mask corresponding to a product result $\mathbf{e}(= \mathbf{r}_2\mathbf{x}'^T)$ based on $[\mathbf{r}_2]_i$ and $[\mathbf{r}_4]_i$ in the party i fragment $\{[\mathbf{r}_k]_i\}$ of the random array, and characteristic mask data **x',** and sends the party i fragment $[\mathbf{e}']_i$ of the product mask to the other parties; and further, the party $P_i$ reconstructs the product mask data $\mathbf{e'}$ by using $[\mathbf{e'}]_i$ and the party i fragment $[\mathbf{e'}]_{\bar{i}}$ of the product mask received from the other parties. In some examples, the party $P_i$ calculates the party i fragment $[\mathbf{e'}]_i$ of the product mask and reconstructs the product mask data $\mathbf{e'}$ by using the following formulas (12) and (13).

$$[\mathbf{e'}]_i = [\mathbf{r}_2]_i {\mathbf{x'}}^{\mathrm{T}} - [\mathbf{r}_4]_i \qquad (12)$$

$$\mathbf{e'} = [\mathbf{e'}]_i + [\mathbf{e'}]_{\bar{i}} \qquad (13)$$

As such, the party $P_i$ can calculate the product mask data e' before this step is performed. It is worthwhile to note that, for the calculation item $\mathbf{r_2x'^Tr_1}$, it can be further designed that the party $P_i$ reconstructs the mask data corresponding to $\mathbf{x'^Tr_1}$. The specific reconstruction process can be adaptively designed.

Further, in this step, the party $P_i$ can calculate the party i fragment $[\mathbf{M}]_i$ of the removal data based on the reconstructed product mask data $\mathbf{e'}$ and the party i fragment $\{[\mathbf{r}_k]_i\}$ of the random array.

In addition, the gradient mask data $\nabla\mathbf{w'}$ in formula (9) can be calculated by either of the party $P_i$ and the other parties, for example, can be calculated by the party $P_i$ alone or can be calculated by both parties, provided that through design, $\nabla\mathbf{w'}$ can be restored based on a result of calculation for $\nabla\mathbf{w'}$ performed by the party $P_i$ and a result of calculation for $\nabla\mathbf{w'}$ performed by the other parties. For example, the party $P_i$ calculates $\alpha_i\nabla\mathbf{w'}$, and the sum of $\alpha_i\nabla\mathbf{w'}$ and $\alpha_{\bar{i}}\nabla\mathbf{w'}$ calculated by the other parties is $\nabla\mathbf{w'}$.

Based on the above description, in this step, according to some embodiments, the party $P_i$ calculates the party i fragment $[\mathbf{M}]_i$ of the removal data as the party i fragment $[\nabla\mathbf{w}]_i$ of the gradient. According to some other embodiments, the party $P_i$ calculates the gradient mask data $\nabla\mathbf{w'}$ and the party i fragment $[\mathbf{M}]_i$ of the removal data, and uses the sum of the gradient mask data $\nabla\mathbf{w'}$ and the party i fragment $[\mathbf{M}]_i$ of the removal data as the party i fragment $[\nabla\mathbf{w}]_i$ of the gradient, namely, $[\nabla\mathbf{w}]_i = \nabla\mathbf{w'} + [\mathbf{M}]_i$. According to some other embodiments, the party $P_i$ uses the sum of weighted data $\alpha_i\nabla\mathbf{w'}$ of the gradient mask data $\nabla\mathbf{w'}$ and the party i fragment $[\mathbf{M}]_i$ of the removal data as the party i fragment $[\nabla\mathbf{w}]_i$ of the gradient, namely, $[\nabla\mathbf{w}]_i = \alpha_i\nabla\mathbf{w'} + [\mathbf{M}]_i$.

Further, in some examples, the random array $\{\mathbf{r}_k\}$ includes random numbers $\mathbf{r}_1$, $\mathbf{r}_2$, $\mathbf{r}_3$, and $\mathbf{r}_4$, as well as additional values $\mathbf{c}_1$, $\mathbf{c}_2$, $\mathbf{c}_3$, $\mathbf{c}_4$, and $\mathbf{c}_5$, where $\mathbf{c}_1 = \mathbf{r}_2\mathbf{r}_1^{\mathrm{T}}, \mathbf{c}_2 = \mathbf{r}_2\mathbf{r}_1^{\mathrm{T}}\mathbf{r}_1, \mathbf{c}_3 = \mathbf{r}_3^{\mathrm{T}}\mathbf{r}_1, \mathbf{c}_4 = \mathbf{r}_4\mathbf{r}_1, \mathbf{c}_5 = \mathbf{r}_1^{\mathrm{T}}\mathbf{r}_1$. In addition, the masking mentioned in the above steps is subtracting a mask from the processed data, and the splitting into fragments is splitting the raw data into two addition fragments, namely, $s = s_1 + s_2$.

Correspondingly, in step S28, the party $P_0$ calculates the party 0 fragment $[\mathbf{M}]_0$ of the removal data as the party 0 fragment $[\nabla\mathbf{w}]_0$ of the gradient by using the following formula (14). In step S29, the party $P_1$ calculates the sum result of the gradient mask data $\nabla\mathbf{w'}$ and the party 1 fragment $[\mathbf{M}]_1$ of the removal data as the party 1 fragment $[\nabla\mathbf{w}]_1$ of the gradient by using the following formula (15).

$$[\nabla\mathbf{w}]_0 = \frac{1}{4m}(2[\mathbf{r}_1]_0 + (\mathbf{w'}[\mathbf{r}_1]_0^{\mathrm{T}}\mathbf{x'} + [\mathbf{r}_2]_0(\mathbf{x'})^{\mathrm{T}}\mathbf{x'} + \mathbf{w'}(\mathbf{x'})^{\mathrm{T}}[\mathbf{r}_1]_0) - 4((\mathbf{y'})^{\mathrm{T}})[\mathbf{r}_1]_0 +$$
$$[\mathbf{r}_3]_0^{\mathrm{T}}\mathbf{x'}) + [\mathbf{c}_1]_0\mathbf{x'} + \mathbf{w'}[\mathbf{c}_5]_0 + \mathbf{e'}[\mathbf{r}_1]_0 + [\mathbf{c}_4]_0 + [\mathbf{c}_2]_0 - 4[\mathbf{c}_3]_0)$$

$$(14)$$

$$[\nabla\mathbf{w}]_1 = \frac{1}{4m}(2\mathbf{x'} + 2[\mathbf{r}_1]_1 + (\mathbf{w'}(\mathbf{x'})^{\mathrm{T}}\mathbf{x'} + \mathbf{w'}[\mathbf{r}_1]_1^{\mathrm{T}}\mathbf{x'} + [\mathbf{r}_2]_1(\mathbf{x'})^{\mathrm{T}}\mathbf{x'} +$$
$$\mathbf{w'}(\mathbf{x'})^{\mathrm{T}}[\mathbf{r}_1]_1) - 4((\mathbf{y'})^{\mathrm{T}}\mathbf{x'} + (\mathbf{y'})^{\mathrm{T}})[\mathbf{r}_1]_1 + [\mathbf{r}_3]_1^{\mathrm{T}}\mathbf{x'}) + [\mathbf{c}_1]_1\mathbf{x'} + \mathbf{w'}[\mathbf{c}_5]_1 +$$
$$\mathbf{e'}[\mathbf{r}_1]_1 + [\mathbf{c}_4]_1 + [\mathbf{c}_2]_1 - 4[\mathbf{c}_3]_1)$$

$$(15)$$

As such, the party $P_i$ can calculate the party i fragment $[\nabla\mathbf{w}]_i$ of the gradient for updating the party i fragment $[\mathbf{w}]_i$ of the model parameter.

According to some embodiments in another aspect, the method can further include steps S210 (i = 0) and S211 (i = 1). The party $P_i$ subtracts a product of the predetermined learning rate $\beta$ and the party i fragment $[\nabla\mathbf{w}]_i$ of the gradient from the party i fragment $[\mathbf{w}]_i$ of the model parameter, and uses a result as an updated fragment $[\mathbf{w}]_i$, namely:

$$[\mathbf{w}]_i = [\mathbf{w}]_i - \beta^*[\nabla\mathbf{w}]_i \qquad\qquad (16)$$

As such, the party $P_i$ can update the party i fragment $[\nabla\mathbf{w}]_i$ of the gradient. It is worthwhile to further note that the relative execution order of the above steps is not unique, provided that the execution logic is not affected. Moreover, the above method steps can be repeated to update the LR model in multiple rounds of iterations until the quantity of iterations reaches a predetermined quantity or the model parameter reaches a predetermined convergence criterion, thereby obtaining a final LR model. For example, the party $P_0$ and the party $P_1$ can send each other a parameter fragment obtained through update in the last round of iterations so that both parties locally construct complete model parameters.

In conclusion, according to the method for jointly training a logistic regression model disclosed in some embodiments of this specification, a secret sharing technology is described and a random number fragment is sent by a third party so as to construct mask data corresponding to a sample characteristic, a model parameter, and a sample label, thereby implementing secure calculation of a gradient fragment and effectively reducing communication traffic and calculation amounts among participants.

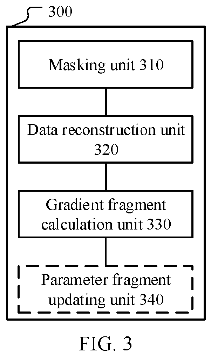

Corresponding to the above training method, some embodiments of this specification further disclose training apparatuses. FIG. 3 is a schematic structural diagram illustrating an apparatus for jointly training a logistic regression model, according to some embodiments. The training includes three types of training data: a sample characteristic, a sample label, and a model parameter, and each of the three types of training data is split into fragments that are distributed between two parties. The apparatus is integrated into either first party of the two parties. As shown in FIG. 3, the apparatus 300 includes: a masking unit 310, configured to perform masking on three first-party fragments corresponding to the three types of training data by respectively using first fragments of three random numbers in a first fragment of a random array to obtain three first mask fragments, and send the three first mask fragments to a second party, where the first fragment of the random array is a fragment, sent by a third party to the first party, of two-party fragments that are obtained by splitting values in the random array generated by the third party; a data reconstruction unit 320, configured to construct three pieces of mask data corresponding to the three types of training data by using the three first mask fragments and three second mask fragments received from the second party; and a gradient fragment calculation unit 330, configured to perform a first calculation based on the three pieces of mask data and the first fragment of the random array to obtain a first gradient fragment for updating the first-party fragment of the model parameter, where the first calculation is determined based on a Taylor expansion of a gradient calculation of the logistic regression model.

In some embodiments, the first party holds the sample characteristic and the second party holds the sample label. The apparatus 300 further includes: a fragment sending unit, configured to split the sample characteristic into a corresponding first-party fragment and a corresponding second-party fragment by using a secret sharing technology, and send the second-party fragment to the second party; and a fragment receiving unit, configured to receive, from the second party, a first-party fragment obtained by splitting the sample label by using the secret sharing technology.

In some embodiments, the apparatus 300 further includes a parameter processing unit, configured to: after initializing the model parameter, split the model parameter into a corresponding first-party fragment and a corresponding second-party fragment, and send the second-party fragment to the second party.

In some embodiments, the apparatus 300 further includes a parameter fragment receiving unit, configured to receive, from the second party, a first-party fragment obtained by splitting the initialized model parameter by using the secret sharing technology.

In some embodiments, the masking unit 310 is specifically configured to: for any type of training data, perform masking on a first-party fragment of the type of training data by using a first fragment of a random number having the same dimension as the type of training data to obtain a corresponding first mask fragment.

In some embodiments, the data reconstruction unit 320 is specifically configured to: for any type of training data, construct corresponding mask data by using a first mask fragment and a second mask fragment of the type of training data.

In some embodiments, the random array further includes a fourth random number, the three random numbers include a second random number corresponding to the model parameter, and the three pieces of mask data include characteristic mask data corresponding to the sample characteristic. The apparatus further includes a product masking unit, configured to determine a first product mask fragment corresponding to a product result of the second random number and the characteristic mask data based on a first fragment of the second random number, the characteristic mask data, and a first fragment of the fourth random number, and send the first product mask fragment to the second party; and construct product mask data corresponding to the product result by using the first product mask fragment and a second product mask fragment corresponding to the product result received from the second party. The gradient fragment calculation unit 330 is specifically configured to further perform the first calculation based on the product mask data.

In some embodiments, the random array further includes a plurality of additional values, and the plurality of additional values are values obtained by the third party by performing an operation based on the three random numbers. The gradient fragment calculation unit 330 is specifically configured to calculate gradient mask data corresponding to a training gradient based on the three pieces of mask data; calculate a first removal fragment for a mask in the gradient mask data based on the three pieces of mask data, the first fragments of the three random numbers, and a first fragment of the plurality of additional values; and perform de-masking on the gradient mask data by using the first removal fragment to obtain the first gradient fragment. Alternatively, the gradient fragment calculation unit 330 is specifically configured to determine the first removal fragment as the first gradient fragment.

In some embodiments, the apparatus 300 further includes a parameter fragment updating unit 340, configured to subtract a product of a predetermined learning rate and the first gradient fragment from the first-party fragment of the model parameter as an updated first-party fragment of the model parameter.

According to some embodiments in another aspect, a computer-readable storage medium is further provided, where the computer-readable storage medium stores a computer program, and when the computer program is executed in a computer, the computer is enabled to perform the method described with reference to FIG. 2.

According to some embodiments in yet another aspect, a computing device is further provided, including a memory and a processor, where the memory stores executable code, and the processor executes the executable code to implement the method described with reference to FIG. 2.

A person skilled in the art should be aware that in the above-mentioned one or more examples, functions described in this application can be implemented by hardware, software, firmware, or any combination thereof. When being implemented by software, these functions can be stored in a computer-readable medium or transmitted as one or more instructions or code in the computer-readable medium.

The above-mentioned some specific implementations further describe the purposes, technical solutions, and beneficial effects of this application. It should be understood that the previous descriptions are merely some specific implementations of this application and are not intended to limit the protection scope of this application. Any modification, equivalent replacement, or improvement made based on the technical solutions of this application shall fall within the protection scope of this application.

## Claims

1.    A computer-implemented method for jointly training a logistic regression model, wherein the training comprises three types of training data: a sample characteristic, a sample label, and a model parameter, and each of the three types of training data is split, using secret sharing technology, into fragments that are distributed between two parties; the method is performed by either first party of the two parties, and comprises:

Performing masking (S22, S23) on three first-party fragments corresponding to the three types of training data by respectively using first fragments of three random numbers in a first fragment of a random array to obtain three first mask fragments, wherein the random array is generated by a third party other than the two parties and used by the third party to obtain two-party fragments of the random array, each of the two-party fragments obtained by the third party by splitting, using secret sharing technology, values in the random array to obtain a respective fragment of the random array that is sent by the third party to each respective party of the two parties;
sending (S24, S25) the three first mask fragments to a second party;
constructing (S26, S27) three pieces of mask data corresponding to the three types of training data by using the three first mask fragments and three second mask fragments received from the second party; and
performing (S28, S29) a first calculation based on the three pieces of mask data and the first fragment of the random array to obtain a first gradient fragment for updating the first-party fragment of the model parameter, wherein the first calculation is determined based on a first-order Taylor expansion of a gradient calculation of the logistic regression model.

2.    The method according to claim 1, wherein the first party holds the sample characteristic and the second party holds the sample label; and before obtaining the three first mask fragments, the method further comprises:

splitting the sample characteristic into a corresponding first-party fragment and a corresponding second-party fragment by using secret sharing technology, and sending the second-party fragment to the second party; and receiving, from the second party, a first-party fragment obtained by splitting the sample label by using secret sharing technology.

3.    The method according to claim 1 or 2, wherein before obtaining the three first mask fragments, the method further comprises:

after initializing the model parameter, splitting the model parameter into a corresponding first-party fragment and a corresponding second-party fragment, and sending the second-party fragment to the second party; or

receiving, from the second party, a first-party fragment obtained by splitting the initialized model parameter by using the secret sharing technology.

4. The method according to claim 1, wherein the performing masking on three first-party fragments corresponding to the three types of training data by respectively using first fragments of three random numbers to obtain three first mask fragments comprises:
for any type of training data, performing masking on a first-party fragment of the type of training data by using a first fragment of a random number having the same dimension as the type of training data to obtain a corresponding first mask fragment.

5. The method according to claim 1, wherein the constructing three pieces of mask data corresponding to the three types of training data by using the three first mask fragments and three second mask fragments received from the second party comprises:
for any type of training data, constructing corresponding mask data by using a first mask fragment and a second mask fragment of the type of training data.

6. The method according to claim 1, wherein the random array further comprises a fourth random number; the three random numbers comprise a second random number corresponding to the model parameter; the three pieces of mask data comprise characteristic mask data corresponding to the sample characteristic; after constructing the three pieces of mask data corresponding to the three types of training data and before obtaining the first gradient fragment, the method further comprises:

determining a first product mask fragment corresponding to a product result of the second random number and the characteristic mask data based on a first fragment of the second random number, the characteristic mask data, and a first fragment of the fourth random number, and sending the first product mask fragment to the second party;
constructing product mask data corresponding to the product result by using the first product mask fragment and a second product mask fragment corresponding to the product result received from the second party; and
the performing a first calculation based on the three pieces of mask data and the first fragment of the random array comprises:
further performing the first calculation based on the product mask data.

7. The method according to claim 1 or 6, wherein the random array further comprises a plurality of additional values, and the plurality of additional values are values obtained by the third party by performing an operation based on the three random numbers; the performing a first calculation based on the three pieces of mask data and the first fragment of the random array to obtain a first gradient fragment comprises:

calculating gradient mask data corresponding to a training gradient based on the three pieces of mask data;
calculating a first removal fragment for a mask in the gradient mask data based on the three pieces of mask data, the first fragments of the three random numbers, and a first fragment of the plurality of additional values; and
performing de-masking on the gradient mask data by using the first removal fragment to obtain the first gradient fragment, or
determining the first removal fragment as the first gradient fragment.

8. The method according to claim 1, wherein after obtaining the first gradient fragment, the method further comprises:
subtracting a product of a predetermined learning rate and the first gradient fragment from the first-party fragment of the model parameter as an updated first-party fragment of the model parameter.

9. An apparatus for jointly training a logistic regression model, wherein the training comprises three types of training data: a sample characteristic, a sample label, and a model parameter, and each of the three types of training data is split, using secret sharing technology, into fragments that are distributed between two parties; the apparatus is integrated into either first party of the two parties, and comprises:

a masking unit, configured to

perform masking on three first-party fragments corresponding to the three types of training data by respectively using first fragments of three random numbers in a first fragment of a random array to obtain three first mask fragments, wherein the random array is generated by a third party other than the two parties and used by the third party to obtain two-party fragments of the random array, each of the two-party fragments obtained by the third party by splitting, using secret-shared technology, values in the random array to obtain a respective fragment of the random array that is sent by the third party to each respective party of the two parties; and

send the three first mask fragments to a second party;

a data reconstruction unit, configured to construct three pieces of mask data corresponding to the three types of training data by using the three first mask fragments and three second mask fragments received from the second party; and

a gradient fragment calculation unit, configured to perform a first calculation based on the three pieces of mask data and the first fragment of the random array to obtain a first gradient fragment for updating the first-party fragment of the model parameter, wherein the first calculation is determined based on a first-order Taylor expansion of a gradient calculation of the logistic regression model.

10. A computer-readable storage medium, wherein the computer-readable storage medium stores a computer program, and when the computer program is executed on a computer, the computer is enabled to perform the method according to any one of claims 1 to 8.

11. A computing device, comprising a memory and a processor, wherein the memory stores executable code, and the processor executes the executable code to implement the method according to any one of claims 1 to 8.

**Patentansprüche**

1. Computerimplementiertes Verfahren zum gemeinsamen Trainieren eines logistischen Regressionsmodells, wobei das Trainieren drei Arten von Trainingsdaten umfasst:
eine Stichprobencharakteristik, eine Stichprobenbezeichnung und einen Modellparameter, und wobei jede der drei Arten von Trainingsdaten unter Verwendung einer Geheimnisteilungstechnologie in Fragmente aufgeteilt wird, die zwischen zwei Parteien verteilt werden; wobei das Verfahren durch jede erste Partei der zwei Parteien durchgeführt wird und Folgendes umfasst:

Durchführen einer Maskierung (S22, S23) an drei Fragmenten der ersten Partei, die den drei Arten von Trainingsdaten entsprechen, unter jeweiliger Verwendung von ersten Fragmenten von drei Zufallszahlen in einem ersten Fragment eines Zufallsarrays, um drei erste Maskenfragmente zu erhalten, wobei das Zufallsarray durch eine dritte Partei erzeugt wird, die sich von den zwei Parteien unterscheidet, und durch die dritte Partei verwendet wird, um Fragmente von zwei Parteien des Zufallsarrays zu erhalten, wobei jedes der Fragmente der zwei Parteien durch die dritte Partei durch Aufteilen, unter Verwendung einer Geheimnisteilungstechnologie, von Werten in dem Zufallsarray erhalten wird, um ein jeweiliges Fragment des Zufallsarrays zu erhalten, das durch die dritte Partei an jede jeweilige Partei der zwei Parteien gesendet wird;
Senden (S24, S25) der drei ersten Maskenfragmente an eine zweite Partei;
Konstruieren (S26, S27) von drei Teilen von Maskendaten, die den drei Arten von Trainingsdaten entsprechen, unter Verwendung der drei ersten Maskenfragmente und von drei zweiten Maskenfragmenten, die von der zweiten Partei empfangen werden; und
Durchführen (S28, S29) einer ersten Berechnung basierend auf den drei Teilen von Maskendaten und dem ersten Fragment des Zufallsarrays, um ein erstes Gradientenfragment zum Aktualisieren des Fragments der ersten Partei des Modellparameters zu erhalten, wobei die erste Berechnung basierend auf einer Taylorentwicklung erster Ordnung einer Gradientenberechnung des logistischen Regressionsmodells bestimmt wird.

2. Verfahren nach Anspruch 1, wobei die erste Partei die Stichprobencharakteristik hält und die zweite Partei die Stichprobenbezeichnung hält; und wobei vor dem Erhalten der drei ersten Maskenfragmente das Verfahren ferner Folgendes umfasst:

Aufteilen der Stichprobencharakteristik in ein entsprechendes Fragment der ersten Partei und ein entsprechendes Fragment der zweiten Partei unter Verwendung einer Geheimnisteilungstechnologie, und Senden des Fragments der zweiten Partei an die zweite Partei; und
Empfangen, von der zweiten Partei, eines Fragments der ersten Partei, das durch Aufteilen der Stichprobenbezeichnung unter Verwendung einer Geheimnisteilungstechnologie erhalten wird.

3. Verfahren nach Anspruch 1 oder 2, wobei vor dem Erhalten der drei ersten Maskenfragmente das Verfahren ferner Folgendes umfasst:

nach Initialisieren des Modellparameters, Aufteilen des Modellparameters in ein entsprechendes Fragment der ersten Partei und ein entsprechendes Fragment der zweiten Partei, und Senden des Fragments der zweiten Partei an die zweite Partei; oder
Empfangen, von der zweiten Partei, eines Fragments der ersten Partei, das durch Aufteilen des initialisierten Modellparameters unter Verwendung der Geheimnisteilungstechnologie erhalten wird.

4. Verfahren nach Anspruch 1, wobei das Durchführen einer Maskierung an drei Fragmenten der ersten Partei, die den drei Arten von Trainingsdaten entsprechen, unter jeweiliger Verwendung von ersten Fragmenten von drei Zufallszahlen, um drei erste Maskenfragmente zu erhalten, Folgendes umfasst:
für eine beliebige Art von Trainingsdaten, Durchführen einer Maskierung an einem Fragment der ersten Partei der Art von Trainingsdaten unter Verwendung eines ersten Fragments einer Zufallszahl mit der gleichen Dimension wie die Art von Trainingsdaten, um ein entsprechendes erstes Maskenfragment zu erhalten.

5. Verfahren nach Anspruch 1, wobei das Konstruieren von drei Teilen von Maskendaten, die den drei Arten von Trainingsdaten entsprechen, unter Verwendung der drei ersten Maskenfragmente und von drei zweiten Maskenfragmenten, die von der zweiten Partei empfangen werden, Folgendes umfasst:
für eine beliebige Art von Trainingsdaten, Konstruieren entsprechender Maskendaten unter Verwendung eines ersten Maskenfragments und eines zweiten Maskenfragments der Art von Trainingsdaten.

6. Verfahren nach Anspruch 1, wobei das Zufallsarray ferner eine vierte Zufallszahl umfasst; wobei die drei Zufallszahlen eine zweite Zufallszahl umfassen, die dem Modellparameter entspricht; wobei die drei Teile von Maskendaten Charakteristikmaskendaten umfassen, die der Stichprobencharakteristik entsprechen; wobei nach dem Konstruieren der drei Teile von Maskendaten, die den drei Arten von Trainingsdaten entsprechen, und vor dem Erhalten des ersten Gradientenfragments das Verfahren ferner Folgendes umfasst:

Bestimmen eines ersten Produktmaskenfragments, das einem Produktergebnis der zweiten Zufallszahl und der Charakteristikmaskendaten entspricht, basierend auf einem ersten Fragment der zweiten Zufallszahl, den Charakteristikmaskendaten und einem ersten Fragment der vierten Zufallszahl, und Senden des ersten Produktmaskenfragments an die zweite Partei;
Konstruieren von Produktmaskendaten, die dem Produktergebnis entsprechen, unter Verwendung des ersten Produktmaskenfragments und eines zweiten Produktmaskenfragments, das dem von der zweiten Partei empfangenen Produktergebnis entspricht; und
wobei das Durchführen einer ersten Berechnung basierend auf den drei Teilen von Maskendaten und dem ersten Fragment des Zufallsarrays Folgendes umfasst:
weiteres Durchführen der ersten Berechnung basierend auf den Produktmaskendaten.

7. Verfahren nach Anspruch 1 oder 6, wobei das Zufallsarray ferner mehrere zusätzliche Werte umfasst und die mehreren zusätzlichen Werte Werte sind, die durch die dritte Partei durch Durchführen einer Operation basierend auf den drei Zufallszahlen erhalten werden; wobei das Durchführen einer ersten Berechnung basierend auf den drei Teilen von Maskendaten und dem ersten Fragment des Zufallsarrays, um ein erstes Gradientenfragment zu erhalten, Folgendes umfasst:

Berechnen von Gradientenmaskendaten, die einem Trainingsgradienten entsprechen, basierend auf den drei Teilen von Maskendaten; Berechnen eines ersten Entfernungsfragments für eine Maske in den Gradientenmaskendaten basierend auf den drei Teilen von Maskendaten, den ersten Fragmenten der drei Zufallszahlen und einem ersten Fragment der mehreren zusätzlichen Werte; und Durchführen einer Demaskierung an den Gradientenmaskendaten unter Verwendung des ersten Entfernungsfragments, um das erste Gradientenfragment zu erhalten, oder
Bestimmen des ersten Entfernungsfragments als das erste Gradientenfragment.

8. Verfahren nach Anspruch 1, wobei nach dem Erhalten des ersten Gradientenfragments das Verfahren ferner Folgendes umfasst:

Subtrahieren eines Produkts einer vorbestimmten Lernrate und des ersten Gradientenfragments von dem Fragment der ersten Partei des Modellparameters als ein aktualisiertes Fragment der ersten Partei des Modellparameters.

**9.** Einrichtung zum gemeinsamen Trainieren eines logistischen Regressionsmodells, wobei das Trainieren drei Arten von Trainingsdaten umfasst: eine Stichprobencharakteristik, eine Stichprobenbezeichnung und einen Modellparameter, und wobei jede der drei Arten von Trainingsdaten unter Verwendung einer Geheimnisteilungstechnologie in Fragmente aufgeteilt wird, die zwischen zwei Parteien verteilt werden; wobei die Einrichtung in jede erste Partei der zwei Parteien integriert ist und Folgendes umfasst:

eine Maskierungseinheit, die zu Folgendem ausgelegt ist

Durchführen einer Maskierung an drei Fragmenten der ersten Partei, die den drei Arten von Trainingsdaten entsprechen, unter jeweiliger Verwendung von ersten Fragmenten von drei Zufallszahlen in einem ersten Fragment eines Zufallsarrays, um drei erste Maskenfragmente zu erhalten, wobei das Zufallsarray durch eine dritte Partei erzeugt wird, die sich von den zwei Parteien unterscheidet, und durch die dritte Partei verwendet wird, um Fragmente von zwei Parteien des Zufallsarrays zu erhalten, wobei jedes der Fragmente der zwei Parteien durch die dritte Partei durch Aufteilen, unter Verwendung einer Geheimnisteilungstechnologie, von Werten in dem Zufallsarray erhalten wird, um ein jeweiliges Fragment des Zufallsarrays zu erhalten, das durch die dritte Partei an jede jeweilige Partei der zwei Parteien gesendet wird; und Senden der drei ersten Maskenfragmente an eine zweite Partei;

eine Datenrekonstruktionseinheit, die dazu ausgelegt ist, drei Teilen von Maskendaten, die den drei Arten von Trainingsdaten entsprechen, unter Verwendung der drei ersten Maskenfragmente und von drei zweiten Maskenfragmenten, die von der zweiten Partei empfangen werden, zu konstruieren; und
eine Gradientenfragmentberechnungseinheit, die dazu ausgelegt ist, eine erste Berechnung basierend auf den drei Teilen von Maskendaten und dem ersten Fragment des Zufallsarrays durchzuführen, um ein erstes Gradientenfragment zum Aktualisieren des Fragments der ersten Partei des Modellparameters zu erhalten, wobei die erste Berechnung basierend auf einer Taylorentwicklung erster Ordnung einer Gradientenberechnung des logistischen Regressionsmodells bestimmt wird.

**10.** Computerlesbares Speichermedium, wobei das computerlesbare Speichermedium ein Computerprogramm speichert und, wenn das Computerprogramm auf einem Computer ausgeführt wird, dem Computer ermöglicht wird, das Verfahren nach einem der Ansprüche 1 bis 8 durchzuführen.

**11.** Rechenvorrichtung, die einen Speicher und einen Prozessor umfasst, wobei der Speicher ausführbaren Code speichert und der Prozessor den ausführbaren Code ausführt, um das Verfahren nach einem der Ansprüche 1 bis 8 zu implementieren.

## Revendications

**1.** Procédé informatisé d'entraînement conjoint d'un modèle de régression logistique, dans lequel l'entraînement comprend trois types de données d'entraînement : une caractéristique d'échantillon, une étiquette d'échantillon et un paramètre de modèle, et chacun des trois types de données d'entraînement est divisé, au moyen d'une technologie de partage de secrets, en fragments qui sont répartis entre deux parties ; le procédé est exécuté par l'une de la première partie ou de la seconde partie, et comprend :

l'exécution d'un masquage (S22, S23) sur trois fragments de première partie correspondant aux trois types de données d'entraînement en utilisant respectivement des premiers fragments de trois nombres aléatoires dans un premier fragment d'un réseau aléatoire pour obtenir trois premiers fragments de masque, le réseau aléatoire étant généré par un tiers autre que les deux parties et utilisé par le tiers pour obtenir des fragments de deux parties du réseau aléatoire, chacun des fragments de deux parties étant obtenu par le tiers par division, au moyen de la technologie de partage de secrets, de valeurs dans le réseau aléatoire permettant d'obtenir un fragment respectif du réseau aléatoire envoyé par le tiers à chaque partie respective des deux parties ;
l'envoi (S24, S25) des trois premiers fragments de masque à une seconde partie ;
la construction (S26, S27) de trois éléments de données de masque correspondant aux trois types de données d'entraînement en utilisant les trois premiers fragments de masque et trois seconds fragments de masque reçus depuis la seconde partie ; et
l'exécution (S28, S29) d'un premier calcul sur la base des trois éléments de données de masque et du premier fragment du réseau aléatoire pour obtenir un premier fragment de gradient pour mettre à jour le fragment de première partie du paramètre de modèle, le premier calcul étant déterminé sur la base d'une expansion de Taylor de premier ordre d'un calcul de gradient du modèle de régression logistique.

2. Procédé selon la revendication 1, dans lequel la première partie contient la caractéristique d'échantillon et la seconde partie contient l'étiquette d'échantillon ; et avant d'obtenir les trois premiers fragments de masque, le procédé comprend en outre :

la division de la caractéristique d'échantillon en un fragment de première partie correspondant et un fragment de seconde partie correspondant au moyen d'une technologie de partage de secrets, et l'envoi du fragment de seconde partie à la seconde partie ; et
la réception, depuis la seconde partie, d'un fragment de première partie obtenu par division de l'étiquette d'échantillon au moyen d'une technologie de partage de secrets.

3. Procédé selon la revendication 1 ou 2, dans lequel, avant l'obtention des trois premiers fragments de masque, le procédé comprend en outre :

après l'initialisation du paramètre de modèle, la division du paramètre de modèle en un fragment de première partie correspondant et un fragment de seconde partie correspondant, et l'envoi du fragment de seconde partie à la seconde partie ; ou
la réception, depuis la seconde partie, d'un fragment de première partie obtenu par division du paramètre de modèle initialisé au moyen de la technologie de partage de secrets.

4. Procédé selon la revendication 1, dans lequel l'exécution d'un masquage sur trois fragments de première partie correspondant aux trois types de données d'entraînement en utilisant respectivement des premiers fragments de trois nombres aléatoires pour obtenir trois premiers fragments de masque comprend :
pour tout type de données d'entraînement, l'exécution d'un masquage sur un fragment de première partie du type de données d'entraînement en utilisant un premier fragment d'un nombre aléatoire ayant la même dimension que le type de données d'entraînement pour obtenir un premier fragment de masque correspondant.

5. Procédé selon la revendication 1, dans lequel la construction de trois éléments de données de masque correspondant aux trois types de données d'entraînement en utilisant les trois premiers fragments de masque et trois seconds fragments de masque reçus depuis la seconde partie comprend :
pour tout type de données d'entraînement, la construction de données de masque correspondantes en utilisant un premier fragment de masque et un second fragment de masque du type de données d'entraînement.

6. Procédé selon la revendication 1, dans lequel le réseau aléatoire comprend en outre un quatrième nombre aléatoire ; les trois nombres aléatoires comprennent un deuxième nombre aléatoire correspondant au paramètre de modèle ; les trois éléments de données de masque comprennent des données de masque de caractéristique correspondant à la caractéristique d'échantillon ; après la construction des trois éléments de données de masque correspondant aux trois types de données d'entraînement et avant l'obtention du premier fragment de gradient, le procédé comprend en outre :

la détermination d'un premier fragment de masque de produit correspondant à un résultat de produit du second nombre aléatoire et aux données de masque de caractéristique sur la base d'un premier fragment du second nombre aléatoire, des données de masque de caractéristique et d'un premier fragment du quatrième nombre aléatoire, et l'envoi du premier fragment de masque de produit à la seconde partie ;
la construction de données de masque de produit correspondant au résultat de produit en utilisant le premier fragment de masque de produit et un second fragment de masque de produit correspondant au résultat de produit reçu depuis la seconde partie ; et
l'exécution d'un premier calcul sur la base des trois éléments de données de masque et du premier fragment du réseau aléatoire comprend :
l'exécution en outre du premier calcul sur la base des données de masque de produit.

7. Procédé selon la revendication 1 ou 6, dans lequel le réseau aléatoire comprend en outre une pluralité de valeurs supplémentaires, et la pluralité de valeurs supplémentaires sont des valeurs obtenues par le tiers en exécutant une opération sur la base des trois nombres aléatoires ; l'exécution d'un premier calcul sur la base des trois éléments de données de masque et du premier fragment du réseau aléatoire pour obtenir un premier fragment de gradient comprend :

le calcul de données de masque de gradient correspondant à un gradient d'entraînement sur la base des trois éléments de données de masque ; le calcul d'un premier fragment de suppression pour un masque dans les données de masque de gradient sur la base des trois éléments de données de masque, des premiers fragments des trois nombres aléatoires et d'un premier fragment de la pluralité de valeurs supplémentaires ; et l'exécution d'un démasquage sur les données de masque de gradient en utilisant le premier fragment de suppression pour obtenir le premier fragment de gradient, ou
la détermination du premier fragment de suppression en tant que premier fragment de gradient.

8. Procédé selon la revendication 1, dans lequel, après l'obtention du premier fragment de gradient, le procédé comprend en outre :
la soustraction d'un produit d'une vitesse d'apprentissage prédéterminée et du premier fragment de gradient du fragment de première partie du paramètre de modèle en tant que fragment de première partie mis à jour du paramètre de modèle.

9. Appareil d'entraînement conjoint d'un modèle de régression logistique, dans lequel l'entraînement comprend trois types de données d'entraînement : une caractéristique d'échantillon, une étiquette d'échantillon et un paramètre de modèle, et chacun des trois types de données d'entraînement est divisé, au moyen d'une technologie de partage de secrets, en fragments qui sont répartis entre deux parties ; l'appareil est intégré dans l'une de la première partie ou de la seconde partie, et comprend :

une unité de masquage, configurée pour

exécuter un masquage sur trois fragments de première partie correspondant aux trois types de données d'entraînement en utilisant respectivement des premiers fragments de trois nombres aléatoires dans un premier fragment d'un réseau aléatoire pour obtenir trois premiers fragments de masque, le réseau aléatoire étant généré par un tiers autre que les deux parties et utilisé par le tiers pour obtenir des fragments de deux parties du réseau aléatoire, chacun des fragments de deux parties étant obtenu par le tiers par division, au moyen de la technologie de partage de secrets, de valeurs dans le réseau aléatoire permettant d'obtenir un fragment respectif du réseau aléatoire envoyé par le tiers à chaque partie respective des deux parties ; et l'envoi des trois premiers fragments de masque à une seconde partie ;

une unité de reconstruction de données, configurée pour construire trois éléments de données de masque correspondant aux trois types de données d'entraînement en utilisant les trois premiers fragments de masque et trois seconds fragments de masque reçus depuis la seconde partie ; et
une unité de calcul de fragment de gradient, configurée pour exécuter un premier calcul sur la base des trois éléments de données de masque et du premier fragment du réseau aléatoire pour obtenir un premier fragment de gradient pour mettre à jour le fragment de première partie du paramètre de modèle, le premier calcul étant déterminé sur la base d'une expansion de Taylor de premier ordre d'un calcul de gradient du modèle de régression logistique.

10. Support de stockage lisible par ordinateur, dans lequel le support de stockage lisible par ordinateur stocke un programme informatique, et lorsque le programme informatique est exécuté sur un ordinateur, l'ordinateur est activé pour exécuter le procédé selon l'une quelconque des revendications 1 à 8.

11. Dispositif informatique comprenant une mémoire et un processeur, la mémoire stockant du code exécutable, et le processeur exécute le code exécutable pour mettre en œuvre le procédé selon l'une quelconque des revendications 1 à 8.

FIG. 1

Party $P_0$
$[x]_0, [w]_0, [y]_0$

Third party
$\{[r_k]\}$

Party $P_1$
$[x]_1, [w]_1, [y]_1$

$S21, \{[r_k]\}_0$

$S21, \{[r_k]\}_1$

S22:
$[x]_0 \xrightarrow{[r_1]_0} [x']_0$
$[w]_0 \xrightarrow{[r_2]_0} [w']_0$
$[y]_0 \xrightarrow{[r_3]_0} [y']_0$

S23:
$[x]_1 \xrightarrow{[r_1]_1} [x']_1$
$[w]_1 \xrightarrow{[r_2]_1} [w']_1$
$[y]_1 \xrightarrow{[r_3]_1} [y']_1$

$S24: [x']_0, [w']_0, [y']_0$

$S25: [x']_1, [w']_1, [y']_1$

S26:
$[x']_0, [x']_1 \longrightarrow x'$
$[w']_0, [w']_1 \longrightarrow w'$
$[y']_0, [y']_1 \longrightarrow y'$

S27:
$[x']_0, [x']_1 \longrightarrow x'$
$[w']_0, [w']_1 \longrightarrow w'$
$[y']_0, [y']_1 \longrightarrow y'$

S28:
$x', w', y'$
$\{[r_k]\}_0 \longrightarrow [\nabla w]_0$

S29:
$x', w', y'$
$\{[r_k]\}_1 \longrightarrow [\nabla w]_1$

S210:
$[w]_0, [\nabla w]_0 \rightarrow [w]_0$

S211:
$[w]_1, [\nabla w]_1 \rightarrow [w]_1$

FIG. 2

300

Masking unit 310

Data reconstruction unit 320

Gradient fragment calculation unit 330

Parameter fragment updating unit 340

FIG. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018174873 A
- US 20220083690 A

- US 20220092216 A

**Non-patent literature cited in the description**

- **P. MOHASSEL et al.** SecureML: A system for scalable privacy-preserving machine learning. *IEEE Symposium on Security and Privacy*, 2017